(19) Europäisches Patentamt

European Patent Office

Office européen des brevets

(11) Publication number : **0 542 464 A1**

## (12) EUROPEAN PATENT APPLICATION

(21) Application number : **92310079.6**

(22) Date of filing : **03.11.92**

(51) Int. Cl.⁵ : **C08L 69/00,** // (C08L69/00, 67:02)

(30) Priority : **04.11.91 US 787508**

(43) Date of publication of application :
**19.05.93 Bulletin 93/20**

(84) Designated Contracting States :
**DE ES FR GB IT NL**

(71) Applicant : **GENERAL ELECTRIC COMPANY
1 River Road
Schenectady, NY 12345 (US)**

(72) Inventor : **DeRudder, James Louis
1622 Raintree Drive
Mount Vernon, Indiana 47620 (US)**

(74) Representative : **Pratt, Richard Wilson et al
London Patent Operation G.E. Technical
Services Co. Inc. Essex House 12/13 Essex
Street
London WC2R 3AA (GB)**

(54) Polycarbonate resin composition.

(57) A composition comprising an admixture of
a. from about 82 to about 95 weight percent polycarbonate and
b. from about 5 to about 18 weight percent 1,4-cyclohexanedimethanol terephthalate polyester, said polyester essentially free of a second diol and a second acid and said composition essentially free of copolymer produced by transesterification of a and b.

EP 0 542 464 A1

Polycarbonates are well known and have been widely employed for the production of thermoplastic molded articles.

Polycarbonate is a high-performance plastic with good impact strength. In addition to ductility (impact strength), general-purpose polycarbonate has high transparency, wide temperature limits (high impact resistance below -60°C and a UL thermal endurance rating of 115°C with impact), good dimensional stability, high creep resistance and electrical properties which qualify it as sole support for current carrying parts (up to 125°C without loss of impact strength).

Polycarbonate has low water absorption, good stain resistance and a wide range of colorability. A weaker area for polycarbonate is its relatively limited range of chemical resistance, which necessitates careful appraisal of applications involving contact with certain organic solvents, some detergents, strong alkali, certain fats, oils, and greases. Also, another weaker area of polycarbonates is that they have high melt viscosities which makes them to some extent difficult to mold.

Attempts have been made to blend polycarbonates with various polymeric systems. USP No. 3,218,372, for example, describes compositions of polyalkylene terephthalate and polycarbonate resins. These unreinforced compositions are described as having a reduced melt viscosity and as having a higher ductility than the polyalkylene terephthalate resins. Even in the occasional instances where the polycarbonate is miscible with the other polymer system, the properties which make polycarbonate a high performance plastic are generally reduced without additional advantages.

A further attempt to blend polycarbonates is described in DE 1,694,124 wherein 1-5 wt.% polyalkylene terephthalates are employed. Among the polyalkylene terephthalates specifically exemplified is poly 1,4-cyclohexanedimethanol terephthalate. Also of interest are Kawase and Grundmeier USP 3,953,539 and USP 4,056,504. Cyclohexanedimethanol containing polyester are specifically disclosed as blends with polycarbonate in USP 4,391,954. In that reference weight percents of 1 to 99 and 99 to 1 weight % polycarbonate to polyester are disclosed, preferably 25 to 98 weight % polycarbonate. The properties of these blends are compatibility over a wide range while retaining the transparency characteristics of an article molded from the polycarbonate. This is disclosed as being achieved without any appreciable decrease in the mechanical and physical properties, such as Gardner impact strength, tensile strength or flexural strength of a typical polycarbonate molding composition. Also the blends are disclosed as having a reduced melt viscosity, better hydrolysis resistance and reduced water vapor transmission, see USP 4,391,954, column 1, lines 50-65.

Polycarbonate compositions have been utilized in articles for the medical field because inter alia of its relatively high thermal resistance, toughness, impact resistance and transparency. Such molded articles include blood oxygenators, anesthesia canisters, intravenous connectors and the like. However, polycarbonates per se when exposed to ionizing radiation used for sterilization of certain articles in the medical field undergo substantial yellowing. USP 4,778,656 discloses blends of polycarbonate with various polymers for the molding of articles useful in the medical field. The blends are used primarily because of their resistance to yellowing upon exposure to ionizing sterilizing radiation in comparison to polycarbonate alone. Among the polymers which can be employed in blends with the polycarbonate are 1,4 cyclohexanedimethanol containing polyesters. Specific examples of blends of polycarbonate with 1,4-cyclohexanedimethanol terephthalate which also contained the diol comonomer ethylene glycol as well as blends of polycarbonate with Kodar, a polyester having 1,4-cyclohexanedimethanol and an acid portion composed of 85% terephthalate and 15% isophthalate were tested for coloration resistance to sterilizing radiation, see USP 4,778,656, Table 1. The maximum reduction in yellowing occurred with the former blend at 60-80 wt.% polyester. With the latter blend, it seems to occur at 40-50 wt.% polyester.

Additionally USP 4,786,692 disclosed blends of polycarbonate with polyesters containing 1,4-cyclohexanedimethanol and ethylene glycol in 1:4 to 4:1 molar quantities. The blends exhibit lower heat distortion temperatures while retaining good tensile, flexural and impact strength.

In recently laid open PCT 09911, publication date July 7, 1991, Eastman disclosed a composition having 10-90 wt.% polycarbonate, 10-90 wt.% 1,4-cyclohexanedimethanol terephthalate wherein 1-50 wt.% of these two polymers are transesterified to form complex copolymers. Among the uses for these compositions are medical objects. An article by Mohn et. al appearing in Journal of Applied Polymer Science, Vol. 23, 575-587 (1979) discloses a crystalline non-transparent blend of 75 wt.% aromatic polycarbonate and 25 wt.% 1,4-cyclohexanedimethanol terephthalate.

A new polycarbonate composition has been discovered. This composition within a very narrow weight percent range of a specific 1,4-cyclohexanedimethanol containing polyester demonstrates a combination of excellent resistance to coloration upon exposure to ionizing sterilizing radiation and ease of processibility in comparison to blends of polycarbonate with other 1,4-cyclohexanedimethanol containing polyesters. Additionally the claimed range of 1,4-cyclohexanedimethanol containing polyester polycarbonate blends show excellent retention of impact, better mold release characteristics and flow enhancement while maintaining excellent heat resistance. Little or no transesterification of the two polymers occurs. There is significantly less than 1 wt.% of the two materials present as copolymer. A transparent, non crystalline composition is obtained.

## SUMMARY OF THE INVENTION

In accordance with the invention there is a transparent, non-crystalline composition comprising an admixture of

a. from about 82 to about 95 weight % aromatic polycarbonate and

b. from about 5 to about 18 weight % 1,4-cyclohexanedimethanol terephthalate polyester, said polyester essentially free of a second diol and a second acid and said composition essentially free of copolymer produced by transesterification of a and b.

## DETAILED DESCRIPTION OF THE INVENTION

The aromatic polycarbonates which are useful in this invention include those compositions disclosed in USP 4,786,692 at column 6, line 3 to column 7, line 43, hereby incorporated by reference.

The polyester which is employed in the composition of this invention is the condensation product of either the cis, trans, or mixtures thereof of 1,4-cyclohexanedimethanol and terephthalic acid. Such polyester is essentially free of any codiol such as ethylene glycol or butylene glycol. Additionally the polyester is essentially free of any coacid such as isophthalic acid. By "essentially free" is meant any amount of co-monomer which detrimentally effects the properties. Generally less than about 5 mole % of the comonomer, preferably less than about 2 mole %, and most preferably a nondetectable amount of comonomer compared to cyclohexanedimethanol or terephthalic acid, as the case may be.

The blend is a true blend of the two polymers, polycarbonate and polyester. There is essentially no copolymer of a and b present from a transesterification reaction. Less than 1 wt.% copolymer is present, preferably less than 0.5 wt.% of a and b are present as copolymer. Essentially free" means less than 1%, preferably less than 0.5 wt.% of copolymer in the composition. Copolymer formation is inhibited by quenching the transesterification reaction catalyst sometimes present in the polyester by the addition of a conventional quenching agent such as a phosphite or phosphorous acid.

The polyester will generally have an intrinsic viscosity of from about 0.4 to about 2.0 dl/g as measured in 60:40 phenol tetrachloroethane mixture or similar solvent at 23-30°C.

Preparation of admixtures of the copolymers may be carried out in any convenient manner. In the usual case, finely divided dry powders of the polymers are simply blended together on a mechanical mixer and the blend is compounded by passage through an extruder at an elevated temperature above the softening points of the polymeric constituents. Alternatively, however, the polymers may be dissolved in a mutual solvent from which they are subsequently recovered in blended form by evaporation, distillation or precipitation.

The resulting polymer blend can be further modified if desired, by incorporation of standard amounts of conventional additives such as thermal stabilizer, for example a phosphite, antioxidant for example a hindered phenol, a mold release agent, and the like.

These blends of the invention can be used for various applications, including compact discs and automotive applications. However, the application for which this blend is particularly well suited is molded articles useful in the medical field, particularly those which must be sterilized prior to use. As stated previously, polycarbonate has been a suggested material of choice for such articles because of its property spectrum. Various additives and polymers, including polyesters, have been admixed with the polycarbonate with varying results. Not one specific formulation has been totally satisfactory. Although many of these formulations have been able to reduce the color formed subsequent to sterilization by the ionizing radiation, the actual composition is extremely difficult to process into the molded article and/or has other problems such as haziness, loss of impact strength, and the like. Furthermore the molder of the article would prefer to mold a composition which flows well and is easily released from the mold.

All these properties can be achieved by utilizing the composition of this invention - an admixture of from about 82 to 95 wt.% aromatic polycarbonate and about 5 to 18 wt.% of 1,4-cyclohexanedimethanol terephthalate polyester, hereafter referred to as "PCT". Preferred quantities of PCT are from about 8 to 14 wt.%, the wt.% of the PCT and aromatic polycarbonate measured as the total of the PCT and aromatic polycarbonate. Less than 5% of the PCT is to be avoided because the reduction of color following the sterilizing radiation is generally insufficient. Above about 18 wt.% of PCT, the composition can suffer from loss of impact strength, haze, crystallinity, usually manifested as lack of transparency, erratic shrinkage upon drying as well as dimensional instability. Generally, transparency is a desired characteristic of a medical object.

Certain polyesters have been used commercially as blends with polycarbonate to make medical objects having reduced color after ionizing radiation sterilization. These cyclohexanedimethanol containing polyesters, disclosed in aforementioned USP 4,778,656, have been used in high concentrations (50 weight percent polyester, 50 weight percent polycarbonate) in order to achieve the appropriate reduction in color. The specific polyesters commercially used have been Kodar Al50, all 1,4-cyclohexanedimethanol 85% terephthalate and 15% isophthalate, and PCTG, all terephthalate and 80 mole% 1-,4-cyclohexanedimethanol with 20 mole% ethylene glycol, both polyesters available from Eastman Chemical. However, both of these polymer blends have been extremely difficult to process into molded articles. Problems such as difficulty in drying, aberrant impact resistance and the like accompanied the withdrawal of one of these products from the market place.

The composition of this invention is readily and consistently processible into medical objects while achieving the same or better reduction in color following ionizing sterilizing radiation while using a small percentage of the total polyester used in the commercial compositions. It is extremely surprising to observe a structurally closely related 1,4-cyclohexanedimethanol containing polymer, PCT, performing at a substantially higher level in a polycarbonate blend than its sister molecules.

Example 1

Bisphenol-A polycarbonate (PC) 0.53-0.56 dl/g intrinsic viscosity at 25°C in methylene chloride were blended with varying amount (wt.%) of 1,4-cyclohexanedimethanolterephthalate, PCT - a polyester obtained from Eastman Chemical and a phosphite. Also present in each of the formulations, based on the sum weight percent of polycarbonate and PCT were:

0.02 wt.% 45% aqueous phosphoric acid
0.05 wt.% of 3,4-epoxycyclohexylcarboxylate
0.15 wt.% of a hindered phenol
0.3 wt.% of pentaerythrityltetrastearate (PETS)

The formulations were molded into 1/8 inch thick Izod bars and were tested for impact resistance (Notched Izod) in accordance with ASTM D256. Following are the results.

TABLE I

| PC | PCT | Phosphite (wt. %) | N.I. | % Ductility |
|----|-----|-------------------|------|-------------|
| 90 | 10  | .307              | 15.0 | 100         |
| 88 | 12  | .350              | 14.6 | 100         |
| 86 | 14  | .393              | 14.4 | 100         |
| 84 | 16  | .437              | 13.6 | 100         |
| 82 | 18  | .480              | 13.2 | 100         |
| 80 | 20  | .523              | 9.1  | 60          |
| 78 | 22  | .567              | 9.0  | 60          |
| 76 | 24  | .610              | 6.7  | 40          |

The PC/PCT blends-lost their impact strength and ductility between 18 and 20 wt.% PCT, the 20% PCT level blend showing a marked decrease in impact resistance and ductility.

Example 2

Bisphenol-A polycarbonate (PC) was blended with 0.03% of a phosphite, 0.1 wt.% of a glycol and 0.45 wt.% of pentaerythrityltetrastearate (PETS). A formulation of 88 wt.% PC, 12 wt.% PCT, 0.3 wt.% of a hindered phenol, 0.03 wt.% of phosphorous acid and 0.45 wt.% PETS was blended together. A third formulation which was the same as the second but used 0.25 wt.% PETS was also blended. All three formulations were molded into the shape of a box tool and the force necessary to effectuate release the object from the mold was measured. Below are the results.

TABLE 2

| PC | PCT | PETS | RELEASE FORCE psig |
|-----|-----|------|--------------------|
| 100 | 0 | 0.45 | 3360 |
| 88 | 12 | 0.25 | 2600 |
| 88 | 12 | 0.45 | 2260 |

As shown from the data, the presence of PCT made it substantially easier to release the article from the mold, even when there was less release agent, PETS, present in the formulation.

Example 3

A sampler of Ektar prsently marketed by Eastman Chemical for preparation of molded articles resistant to yellowing upon sterilizing ionizing radiation was obtained and analyzed for polymeric components. The analysis determined that Ektar was 50 wt.% PC and 50 wt.% PCTG, the latter a polyester of terephthalate and 80 mole% 1,4-cyclohexanedimethanol and 20 mole % ethylene glycol. A composition of 88 wt.% PC and 12 wt.% PCT was blended. Spriral flow measurements were made on each composition at different processing temperatures because of the differring processing window of each composition. Below are the results:

| | | | INCHES OF FLOW | |
|---------|---------|-----------|-------|---------|
| MELT T°F | MOLD T°F | THICKNESS | EKTAR | PC/PCT |
| 525 | 80 | 0.03 | 1.83 | |
| | 130 | 0.03 | 1.88 | |
| 575 | 80 | 0.03 | 3.18 | |
| | 130 | 0.03 | 2.58 | 2.00 |
| | 180 | 0.03 | | 2.02 |
| 625 | 130 | 0.03 | | 3.56 |
| | 180 | 0.03 | | 3.40 |
| 525 | 80 | 0.06 | 6.84 | |
| | 130 | 0.06 | 6.88 | |
| 575 | 80 | 0.06 | 10.99 | |
| | 130 | 0.06 | 11.49 | 7.71 |
| | 180 | 0.06 | | 8.33 |
| 625 | 130 | 0.06 | | 13.99 |
| | 180 | 0.06 | | 14.36 |

The arrows indicated the proper comparisons based upon the lower and upper portion of the processability temperature ranges for each of the compositions. As shown by the data, the invention composition shows far superior spiral flow, an indication of processability ease, than the present commercial formulation used for molding which is resistant to yellowing upon exposure to sterilizing irradiation.

Example 4

Samples of 100% polycarbonate (PC), Ektar DA003 (50 wt.% polycarbonate and 50 wt.% PCTG) and a polycarbonate/PCT (88 wt.%/12 wt,%) example of this invention were each pan dried for four (4) hours at 250°F in a circulating oven at the same time. Each of the samples were molded into Izod bars at the same time using the same molding conditions, temperature 575°F except that the Ektar samples were molded at 525°F, following the manufacturer's instructions. The Izod bars were measured for Notched Izod impact resistance under modified ASTM D256 conditions on four different days. Results are in ft./lb/in of notch at room temperature. The figure in the parentheses is % ductility at break. Below are the results:

| | PC | Ektar | PC/PCT |
|---|---|---|---|
| N.I. Day 1 | (80) 10.7 | (0) 1.5 | (80) 12.3 |
| N.I. Day 2 | (100) 12.6 | (40) 8.4 | (80) 11.3 |
| N.I. Day 3 | (100) 13.5 | (40) 8.2 | (100) 14.2 |
| N.I. Day 4 | (100) 13.2 | (40) 8.9 | (100) 14.5 |

The results demonstrate that the invention composition PC/PCT is substantially higher in Notched Izod than the commercially available Ektar composition. Additionally its values show a significant consistency advantage over Ektar. Finally, the PC/PCT compositions values are not significantly different from the values of 100% PC.

Example 5

Chips measuring 3 inches in length by 2 inches in width by 1/8 inch thickness or discs measuring 4 inches in diameter by 1/8 inch thickness were molded from the compositions described below. Samples were wrapped in aluminum foil in groups of six samples per package and gamma irradiated utilizing a cobalt [60] source. The foil wrapped samples were then immediately measured for color shift, Yellowness Index ASTM D103 (Y.I.) within one minute of light exposure. Light exposure over a period of time causes a bleaching of samples thereby resulting in a lower Y.I. The value $\Delta$ Y.I. is the difference in Y.I. for the sample before and after gamma radiation. That is a Y.I. before of 5.0 and after gamma irradiation of 15.0 gives a $\Delta$ Y.I. of 10. Clearly, the lower the $\Delta$ Y.I., the more stable the sample is to gamma irradiation.

M rad is the irradiation dosage in megarads.

| Sample | $\Delta$ Y.I. 2.5 MRad | $\Delta$ Y.I. 5.0 MRad |
|---|---|---|
| polycarbonate(PC) | 15.3 | 47.0 |
| 95% PC/5% PCT | 7.5 | 23.7 |
| 90% PC/10% PCT | 5.85 | 15.6 |
| 85% PC/15% PCT | 4.85 | 12.7 |
| 80% PC/20% PCT | 4.2 | 10.4 |
| 70% PC/30% PCT | 3.0 | 7.6 |
| 50% PC/50% PCT | 2.2 | 6.2 |
| 50% PC/50% PCTG | 8.2 | 16.8 |
| 50% PC/50% PCTG[1] | 9.8 | 20.6 |
| polycarbonate with 0.1 HG | 11.1 | 32.1 |
| (hexylene glycol[2]) | | |

1. catalyst passivated PCTG

2. known gamma irradiation stabilizer

6

This data demonstrates the inventive composition provides excellent gamma irradiation stabilization, far better than a PC composition having 50 wt.% PETG, a commercial gamma stabilized product. In addition it also provides better gamma stabilization than a stabilized 100% PC composition.

| Sample | Δ Y.I. 2.5 RAD | Δ Y.I. 5.0 MRad |
|---|---|---|
| PC + 0.1 HG[1] | 11.2 | 20.6 |
| PC(88)/PCT(12)+0.1HG[1] | 4.8 | 8.1 |
| Ektar (*PC50/PCTG50)*[1] | 5.1 | 10.1 |
| * No analysis for additives | | |
| PC(88)/PCT(12)[2] | 7.3 | 15.4 |
| PC(88/PCT(12)+0.1HG[2] | 5.3 | 11.1 |

1 and 2 are different sets of data obtained with different PC and PCT with measurements at different times. The data above shows the affect of an additional gamma irradiation stabilizing agent being present in the composition. THe excellent gamma stabilizing effects of the inventive composition are demonstrated.

Generally, the I.V. of the PCT used in the Examples is 0.77 ± 0.03.

**Claims**

1. A composition comprising an admixture of
   a. from about 82 to about 95 weight percent polycarbonate and
   b. from about 5 to about 18 weight percent 1,4-cyclohexanedimethanol terephthalate polyester, said polyester being essentially free of a second diol and a second acid and essentially free of copolymer produced by transesterification of a and b.

2. The composition in accordance with Claim 1 wherein the polycarbonate is bisphenol-A polycarbonate.

3. The composition in accordance with Claim 1 or Claim 2 wherein the polyester is from about 8 to about 14 weight percent of the weight of polycarbonate and polyester.

4. The composition in accordance with any one of Claims 1 to 3 wherein the composition is transparent and amorphous.

5. An article molded from the composition of any one of Claims 1 to 4.

6. The article of Claim 5 which has been subjected to sterilising ionizing radiation.

## EP 0 542 464 A1

**European Patent Office**

# EUROPEAN SEARCH REPORT

Application Number

EP 92 31 0079

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | WO-A-9 109 911 (EASTMAN KODAK CO.) * Claims 1,5; page 3, lines 24-29,3-11 * | 1-3,5 | C 08 L 69/00 // (C 08 L 69/00 C 08 L 67:02 ) |
| A | EP-A-0 189 583 (GENERAL ELECTRIC CO.) * Claims 1,14,34-35; page 3, line 15 - page 4, line 27; page 16, lines 25-31; page 17, lines 9-15 * | 1-3,5-6 | |
| A | JOURNAL OF POLYMER SCIENCE, PART B, POLYMER PHYSICS, vol. 24, no. 9, September 1986, pages 2135-2144, New York, US; R.P. KAMBOUR et al.: "Crystallizing crazes:: the probable source of solvent stress cracking resistance in a polyester/polycarbonate blend" | | |
| A | EP-A-0 152 825 (GENERAL ELECTRIC CO.) & US-A-4 778 656 (Cat. D) | | |

| | TECHNICAL FIELDS SEARCHED (Int. Cl.5) |
|---|---|
| | A 61 L C 08 L |

The present search report has been drawn up for all claims

| Place of search | Date of completion of the search | Examiner |
|---|---|---|
| THE HAGUE | 04-03-1993 | MIAO K Y P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8